Europäisches Patentamt

European Patent Office

Office européen des brevets

(19)

(11) **EP 1 429 482 A2**

(12) **EUROPEAN PATENT APPLICATION**

(43) Date of publication:
**16.06.2004 Bulletin 2004/25**

(51) Int Cl.⁷: **H04J 3/06**, H04B 7/26

(21) Application number: **03103734.4**

(22) Date of filing: **08.10.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **13.12.2002 GB 0229171**

(71) Applicant: **MOTOROLA, INC.**
**Schaumburg, IL 60196 (US)**

(72) Inventors:
• **GELLER, Haim**
  **67899, Tel Aviv (IL)**

• **ABEL, Liorah**
  **67899, Tel Aviv (IL)**
• **PERY, Ran**
  **67899, Tel Aviv (IL)**

(74) Representative: **McCormack, Derek James**
**Motorola**
**European Intellectual Property Operations**
**Midpoint**
**Alencon Link**
**Basingstoke Hampshire RG21 7PL (GB)**

(54) **Communication system and method for synchronising communication therefor**

(57)     A host communication system (200) comprises first and second host communication units (210, 220) for hosting and routing a communication (130) having synchronisation data from a primary communication system. The first host communication unit (210) introduces a host synchronisation timing mechanism (240) into the communication to form a modified communication (230) and routes the modified communication (230) to the second host communication unit (220). The second host communication unit (220) determines a host communication system timing delay (255) based on the host synchronisation timing mechanism and adapts the primary communication to indicate an additional delay introduced by the hosting communication system.

In this manner, the primary communication units are able to synchronise their communications taking into account a delay introduced by the hosting communication system.

FIG. 2

## Description

## Field of the Invention

This invention relates to a hosting communication system and communication units supporting communication between communication units on a primary communication system. The invention is applicable to, but not limited to, maintaining synchronisation between primary communication units by linking the timing of the primary communication system and hosting communication system.

## Background of the Invention

Wireless voice and/or data communication systems, for example cellular telephony or private mobile radio communication systems, typically provide for radio telecommunication links to be arranged between a plurality of base transceiver stations (BTSs) and a plurality of subscriber units, often termed mobile stations (MSs).

In a wireless communication system, each BTS has associated with it a particular geographical coverage area (or cell). A particular range that the BTS can maintain acceptable communications with MSs operating within its serving cell defines the coverage area. This range is dependent upon a number of factors; such as transmit power, receiver sensitivity, etc. Typically, coverage areas are configured as overlapping areas to facilitate continuous communication as MS move between the areas. The coverage areas are generally termed cells, which can be distributed widely and combined to produce an extensive coverage area of the communication system, for example to provide countrywide coverage.

A known major problem with such distributed communication systems is time synchronisation. In this regard, time synchronization is a key factor in event sequence logging and controlling of time critical systems.

Frequently, communication systems themselves are inter-connected using a direct point-to-point communication link. Many communication systems use these direct point-to-point communication links to achieve time synchronization within their respective systems. In this regard, the system infrastructure provides a centralised timing reference that is distributed throughout the rest of the system, so that all units can be time-synchronised.

However, in many of the larger communication systems, the system needs to be configured with some geographically separate and distinct (distributed) areas based on, for example, wireless propagation limitations such as topography, distance, etc. Alternatively, the communication system is configured with geographically separate and distinct (distributed) areas based on other criteria, for example, to ease communication management or to use communication media that the system is not capable of utilising.

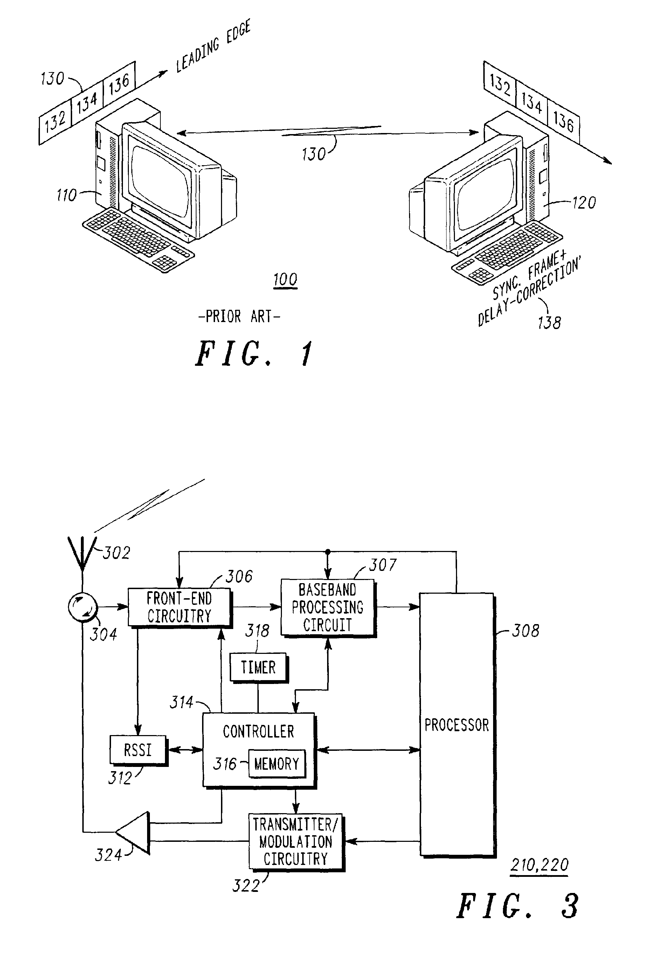

Distributed systems that employ direct point-to-point communication links to achieve time synchronisation usually use a centralised timing reference broadcast in a dedicated timing frame. An example of such a system is shown in FIG. 1. In this regard, the transmitting (primary) communication unit 110, typically a remote subscriber unit, prepares a time synchronisation frame 130 whose leading bytes contain an indication of the 'current' time. The synchronisation frame 130 also includes a mark/flag 136 to identify this frame as a time synchronisation frame. Just prior to transmitting this frame, the bytes that include the 'current' time are updated 134 to ensure accuracy, and the frame is transmitted.

The receiving (primary) communication unit 120, also typically a remote subscriber unit, uses the synchronisation frame mark 136 to identify this frame 130 as a time synchronization frame. The receiving communication unit 120 then calculates the transmission delay. The transmission delay is calculated by determining the time since the unit started to receive the synchronisation frame, and then reading the 'current' time embedded within the synchronisation frame 134. The receiving communication unit 120 then typically accounts for additional mitigating factors such as processing time and known transmission delays for the communication medium. In this manner, the receiving communication unit 120 is able to calculate system delay and adapt its receiver timing so that it is synchronised to the transmitter and therefore able to accurately receive data 138 by summing the synchronisation frame 134 and the delay.

However, frequently such distributed communication systems cannot be inter-connected by means of direct short-range line or wireless direct point-to-point communication links. In such cases, the distributed communication systems then typically route communications over other types of 'hosting' communication media, such as Trunked digital radio networks, satellite communication links, dedicated microwave links or other public network links. When this happens the ability to maintain time-synchronisation in the communication system, as described above, is lost. The loss of time-synchronisation primarily emanates from the variable additional delay that is introduced into the communication links, when communicating via the 'hosting' communication media.

Even if the hosting communication medium supports end-to-end time synchronisation, the originating communication system loses synchronisation, as it has no knowledge of the delays inherent in the hosting communication medium and the associated protocol used. For example, if the hosting medium/protocol is, say, a Motorola Data Link Communication protocol ™ (MDLC) and the main system's protocol is ABB RP570, these two protocols will be unsynchronised. Indeed, any primary communication system protocol that is unable to handle variant communication delays, where the hosting communication system protocol is able to handle variable communication delays, will be un-synchronised. This is a significant problem in the implementation of large communication systems, where for many reasons it is generally imperative to maintain very accurate time-synchronization.

A need therefore exists for a mechanism to improve a support of time synchronization in distributed communication systems that use hosting communication media, wherein the abovementioned disadvantages may be alleviated.

**Statement of Invention**

In accordance with a first aspect of the present invention, there is provided a host communication system. The host communication system comprises a first host communication unit for receiving a communication having synchronisation data from a transmitting communication unit from a primary communication system. A second host communication unit receives the communication routed from the first host communication unit over a hosting communication medium. The host communication system is distinct from the primary communication system. The first host communication unit introduces a host synchronisation timing mechanism into the communication to form a modified (enlarged) communication and transmits the modified communication to the second host communication unit. The second host communication unit determines a timing delay of the communication over the host communication medium based on the host synchronisation timing mechanism. The second host communication unit then decodes and further modifies the communication and transmits the further modified communication to the primary receiving communication unit (for example in its own format) so that it is able to synchronise to the primary transmitting communication unit.

In this manner, the primary communication units are able to synchronise their communications taking into account a delay introduced by the hosting communication system.

Furthermore, the hosting communication units/system have/has been effectively introduced as an integral functional block into the primary communication system, thereby making the primary communication system's synchronisation protocol transparent across a distributed network. Advantageously, this mechanism returns the synchronisation ability to the remote primary communication units, thus enabling accurate synchronisation without any change to the primary communication system.

Preferably, the first host communication unit adds host timing synchronisation data, for example by initiating a host start time or counter function, to form the modified communication. In this manner, the second host communication unit is able to readily determine a time delay introduced by the hosting communication system.

In accordance with a second aspect of the present invention, there is provided a host communication unit, as claimed in Claim 8

In accordance with a third aspect of the present invention, there is provided a host communication unit, as claimed in Claim 10.

In accordance with a fourth aspect of the present invention, there is provided a method of synchronisation in a communication system, as claimed in Claim 12.

In accordance with a fifth aspect of the present invention, there is provided a storage element, as claimed in Claim 13.

**Brief Description of the Drawings**

FIG. 1 illustrates a known (primary) communication system employing time synchronisation.

Exemplary embodiments of the present invention will now be described, with reference to the accompanying drawings, in which:

FIG. 2 shows a block diagram of a distributed communication system that also illustrates the steps employed in the time synchronisation method over a hosting medium, in accordance with the preferred embodiment of the invention; and

FIG. 3 illustrates a block diagram of a (host) communication unit adapted in accordance with the preferred embodiment of the present invention.

**Description of Preferred Embodiments**

The preferred embodiment of the present invention aims to alleviate the problem of time synchronization in a distributed communication system that uses hosting communication media, by provision of a synchronisation mechanism facilitated by the hosting communication units. Advantageously, this allows the primary communication system to remain synchronised across the distributed communication units by using the host communication system to maintain the integrity of time-synchronisation. In effect, the inventors of the present invention have proposed a mechanism that is able to link the two timing structures/communication media. In the context of the present invention, it is noteworthy that the host communication system is a distinct communication system from the primary communication system, i.e. it is not a series of repeaters used in the primary communication system. Furthermore, it is noteworthy that in communication systems that use Gateways and Routers, the Gateways and Routers do not provide fixed delay for all frame transactions. Consequently, such communication systems will only be able to support time synchronisation if they implement an algorithm as hereinafter described in order to synchronise the main system elements.

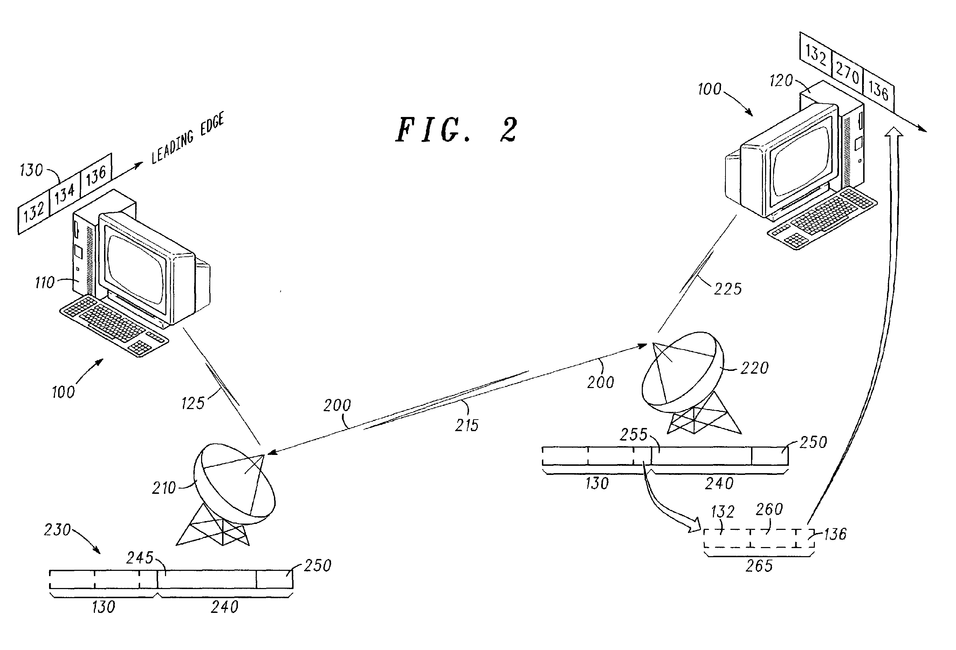

Referring now to FIG. 2, a block diagram of a distributed communication system illustrates a method of time synchronisation in a communication link routed over a hosting communication medium, in accordance with the preferred embodiment of the invention. A first communication unit 110 communicates with a second communication unit 120 over a hosting communication medium. In this regard, the first communication unit 110 transmits 125 a message to a host system (entry) communication unit 210. The host system (entry) communication unit 210 then routes 215 the message to a host system (exit) communication unit 220. The host system (exit) communication unit 220 then transmits 225 the message to the second communication unit 120 of the primary communication system.

In operation, the time synchronisation method is performed as follows. The first (primary transmitting) communication unit 110 prepares a time synchronisation frame 130 whose leading bytes contain the 'current' time. The synchronisation frame 130 also includes a mark/flag 136 to identify this frame as a time synchronisation frame. Just prior to transmitting this frame the bytes that include the 'current' time are updated 134. The first communication unit then transmits the message 125, including the synchronisation frame 130, to the host system (entry) communication unit 210.

In accordance with the preferred embodiment of the present invention, the host system (entry) communication unit 210 receives the transmitted message (frame) 130 and adds to this frame its own current time data 240. The additional timing data 240 is preferably a host start time ($T_{hs}$) 245 initiated by the host system (entry) communication unit 210 upon receiving the message, and a host system synchronisation flag 250. However, it is within the contemplation of the invention that the additional timing data 240 could include employ alternative mechanisms, such as a timing counter.

The host system (entry) communication unit 210 then routes the modified message 230 through the host communication system to the host system (exit) communication unit 220. The host system (exit) communication unit 220 receives the modified message 230 and processes it 255 to identify a time synchronisation adjustment ($\Delta T$) that is required by the primary communication system units. In this regard, just before forwarding the modified message to the second communication unit 120, the host system (exit) communication unit 220 measures its own internal time ($T_{h2}$). It then subtracts from this internal time ($T_{h2}$), the timing of the host start time ($T_{hs}$) that was initiated by the host system (entry) communication unit 210. Advantageously, this calculated timing adjustment ($\Delta T$) represents the delay introduced to the message due to the hosting communication medium.

The host system (exit) communication unit 220 then adds the calculated timing adjustment ($\Delta T$) to the first communicating unit's original time synchronisation frame, as indicated in [1], to produce a further modified time synchronisation frame 265.

$$(\Delta T) = T_{h2} - T_{hs} \qquad [1]$$

The host system (exit) communication unit 220 then transmits the further modified time synchronisation frame 265 to the second communication unit 120, for example in its own format. Advantageously, the second communication unit 120 receives a frame that is substantially similar to the original frame 130, as the host system (exit) communication unit 220 introduces the time synchronisation adjustment into the original synchronisation frame. This original frame 130, which was sent by the transmitting (first) communication unit 110, has effectively been modified to include the corrected time synchronisation data (where the correction 260 = the frame synchronisation 134+$\Delta T$). The second communication unit then receives and processes the modified synchronisation frame 265. The receiving (second) communication unit 120, typically a remote subscriber unit, uses the synchronisation frame mark 136 to identify the synchronisation frame 130 as a time synchronization frame. In this manner, the time adjustment takes into account delays in both the primary and hosting communication system. The adjustment is used to synchronise the second communication unit's internal time to that of the first communication. Thus, both the first and second communication unit 110, 120 now have the same timing stamp.

Notably, in the preferred embodiment of the present invention, the host system (entry) communication unit 210 and the host system (exit) communication unit 220 must be time synchronized. Furthermore, it is envisaged that the hosting communication system is preferably cognisant of (i.e. able to read and modify) the timing synchronisation format of the primary communication system.

In addition, the preferred embodiment of the present invention utilises a hosting communication system with a timing resolution better than the primary communication system. In this manner, the timing resolution can be accurately synchronised as described above, otherwise the main system timing accuracy is affected. For example, if the first and second communication units 110, 120 have a timing resolution of, say, 10msec (i.e. the clock is accurate up to 10msec) then the hosting system must have time resolution better (i.e. smaller) than 10msec.

A skilled artisan will recognise that any hosting communication system, which includes a mechanism to monitor its internal delay and adapt a timing synchronisation message supported by the hosting communication system, can be used to complete the communication link between the end-points of the primary communication system.

It is within the contemplation of the invention that alternative mechanisms to the one described above, may be used to calculate the internal delay within the hosting communication system. For example, instead of introducing a start time or a timing counter implementation, it is envisaged that the hosting communication system may use a real-time stamp. Such a time stamp could be supported by, for example, a time stamp based on the Rubidium or Caesium standards or alternatively using an accurate global positioning system (GPS) function.

Referring now to FIG. 3, a block diagram of a host communication unit 210, 220 is shown, adapted to support the inventive concepts of the preferred embodiments of the present invention. The host communication unit 210, 220 contains an antenna 302 preferably coupled to a duplex filter or antenna switch 304 that provides isolation between receive and transmit chains within the host communication unit 300.

The receiver chain includes receiver front-end circuitry 306 (effectively providing reception, filtering and intermediate or base-band frequency conversion). The front-end circuit 306 is serially coupled to a signal processing function (generally realised by a DSP) 308 via a baseband (back-end) processing circuit 307.

A controller 314 is operably coupled to the front-end circuitry 306 so that the receiver can calculate receive bit-error-rate (BER) or frame-error-rate (FER) or similar link-quality measurement data from recovered information via a received signal strength indication (RSSI) 312 function. The RSSI 312 function is operably coupled to the scanning front-end circuit 306 and used to assess the signal level of any received signal. The memory device 316 stores a wide array of host communication unit-specific data, for example decoding/encoding functions, frequency and timing information for the host and primary communication units, etc.

A timer 318 is operably coupled to the controller 314 to control the timing of operations, namely the transmission or reception of time-dependent signals, within the host communication unit 300.

The transmit chain essentially includes the signal processor 308, transmitter/modulation circuitry 322 and a power amplifier 324. The signal processor 308, transmitter/modulation circuitry 322 and the power amplifier 324 are operationally responsive to the controller, with an output from the power amplifier coupled to the duplex filter or antenna switch 304, as known in the art.

In accordance with a preferred embodiment of the present invention, when the host communication unit is performing an 'entry' based function, the signal processor 308, in conjunction with the timer 318 and controller 314, have been adapted to modify or supplement a synchronisation frame received from a primary communication unit. Preferably, the signal processor 308, initiates a host start time or counter function of the timer 318, upon receiving the synchronisation frame from the primary communication unit. The signal processor 308 incorporates the host start time/counter information in the original message, which is then passed through the transmitter chain and forwarded to the host 'exit' communication unit, as described earlier.

The preferred embodiment of the present invention is described with reference to a wireless host communication unit. However, it is within the contemplation of the invention that other forms of host communication unit could benefit from the inventive concepts herein described. In this regard, a skilled artisan would therefore appreciate that the radio-specific circuitry described above would be replaced by generic features involving a receiver path, micro-controller/DSP, memory, timer and a transmitter path, which are not necessarily wireless-based circuits.

In accordance with a preferred embodiment of the present invention, when the host communication unit is performing an 'exit' based function, the signal processor 308, in conjunction with the timer 318 and controller 314, have been adapted to calculate a host communication delay.

The calculation is based on a time lag from a communication entering the host communication system to leaving the host system. Preferably, a start time embedded in the message is subtracted from the measured current time. Alternatively, the calculation is based on received counter information. Furthermore, the signal processor 308 incorporates an indication of the host communication delay in a modified synchronisation frame of the original message, and forwards the modified message to a receiving (second) communication unit.

In the host communication unit 300, the signal processor function 308 in the transmit chain may be implemented as distinct from the processor in the receive chain. Alternatively, a single signal processor 308 may be used to implement the processing of both transmit and receive signals, as shown in FIG. 3.

Of course, the various components within the host communication unit 300 may be realised in discrete or integrated component form. Furthermore, it is within the contemplation of the invention that the host communication unit 300 may be any communication unit, such as a base transceiver station or repeater station for use with a cellular, mobile radio or data communication primary communication system.

More generally, any re-programming or adaptation of the signal processor 308, according to the preferred embodiment of the present invention, may be implemented in any suitable manner. For example, a new signal processor 308 and/or memory device 316 may be added to a host communication unit 300. Alternatively, existing parts of a host communication unit 300 may be adapted, for example by reprogramming one or more processors therein. The (re-)programming operation may include, for example, a new delay calculation algorithm. As such the required adaptation may be implemented in the form of processor-implementable instructions stored on a storage medium, such as a floppy disk, hard disk, PROM, RAM or any combination of these or other storage multimedia.

It is within the contemplation of the invention that any mechanism to provide system wide synchronization is applicable for the hosting system, such as NTP in Internet Protocol (IP) based systems). Furthermore, it is envisaged that many hosting units that use a 'store' and 'forward' mechanism in a chain-like system may utilise the inventive concepts herein described. In this regard, only the entry host communication unit and the exit host communication unit need to modify the primary system frame time information.

In addition, since the primary system frame structure is known, it is envisaged that the original point-to-point synchronization mechanism can be distributed as point to multi-point synchronization. In this regard, the synchronization frame in the hosting system can be duplicated and distributed to many exit points, (modifying the destination address of the frame, if needed, in addition to modifying the time information).

Although the preferred embodiment of the present invention has been described with respect to the hosting system being a wireless communication system, it is within the contemplation of the invention that the hosting system may use any suitable communication medium. For example, it is envisaged that the hosting communication system may comprise a conventional radio air interface, a Trunked radio air interface, cellular dial-up modems, dial-up modems, fibre optic lines, spread-spectrum wireless communication, multi-drop wireline communication. Furthermore, it is envisaged that the hosting communication system may combine several communication media including, for example, any combination of wireline, fibre-optic, wireless, etc.

It will be understood that the synchronisation mechanism described above provides, at least, one or more of the following advantages:

(i) Remotely synchronised primary communication units.

(ii) Synchronisation between all distributed communication units can be attained, regardless of the hosting communication medium.

(iii) End-user transparency, i.e. no modification to the original communication units or original communication protocol is required.

(iv) Ease of integration.

(v) Ease of upgrading.

(vi) Ease of scalability

(vii) Ability to use communication media that are not supported by the primary system, whilst maintaining synchronization capabilities.

(viii) Addition of point to multi-point synchronization

Whilst specific, and preferred, implementations of the present invention are described above, it is clear that one skilled in the art could readily apply variations and modifications of such inventive concepts.

Thus, a communication unit, a communication system and a synchronisation method have been provided wherein the disadvantages associated with prior art arrangements have been substantially alleviated.

**Claims**

1. A host communication system (200) comprising:

a first host communication unit (210) for receiving a communication (130) having synchronisation data from a transmitting communication unit (110) from a primary communication system (100); and
a second host communication unit (220) for receiving said communication routed from said first host communication unit over a hosting communication medium (215), wherein said host communication system (200) is distinct from said primary communication system (100), and is **characterised by**:

said first host communication unit (210) introducing a host synchronisation timing mechanism (240) into said communication to form a modified communication (230) and transmitting (225) said modified communication (230) to said second host communication unit (220); and
said second host communication unit (220) determining a timing delay (255) of a host communication medium (215) based on said host synchronisation timing mechanism (240), further modifying said communication and transmitting said further modified communication (265) to said receiving communication unit (120) on said primary communication system (100) so that said receiving communication unit (120) is able to synchronise to said transmitting communication unit (110).

2. The host communication system (200) according to Claim 1, the host communication system (200) wherein said host synchronisation timing mechanism (240) comprises said first host communication unit (210) adding host timing synchronisation data (245) to form said modified communication (230).

3. The host communication system (200) according to Claim 2, wherein said host timing synchronisation data (245) comprises a host start time such that said second host communication unit (220) measures a host receive time and determines a time delay (255) based on a difference between said start time and said receive time.

4. The host communication system (200) according to Claim 2, wherein said host timing synchronisation data (245) comprises a host counter function such that said second host communication unit calculates a counter value of said received modified communication (230) to determine a time delay introduced by said host communication system (200).

5. The host communication system (200) according to any one preceding Claim, the host communication system (200) further **characterised in that** said second host communication unit (220) calculates a time synchronisation adjustment ($\Delta$T) to transmit to said receiving communication unit and adjusts said modified communication (230) to form a communication (265) that reflects said time synchronisation adjustment ($\Delta$T).

6. The host communication system (200) according to any one preceding Claim, the host communication system (200) further **characterised in that** said hosting communication system operates with a timing resolution better than said primary communication system (100).

7. The host communication system (200) according to any preceding Claim, wherein the communication system supports one or more of the following interfaces: a conventional radio air interface, a Trunked radio air interface, cellular dial-up modems, dial-up modems, fibre optic lines, spread-spectrum wireless communication, multi-drop wireline communication.

8. A host communication unit (210) performing a hosting function for primary communication system transmissions, wherein the communication unit (210) comprises:

   a receiver for receiving a communication (130) having synchronisation data from a transmitting communication unit (110) from a primary communication system (100); said hostcommunication unit (210) **characterised by**:

   a signal processor (308) configured to introduce a host synchronisation timing mechanism (240) into said communication to form a modified communication (230) that links synchronisation mechanisms between a host communication system and a primary communication system.

9. The host communication unit (210) according to Claim 8, wherein the communication unit (210) is further **characterised by** said signal processor (308) initiating a host start time in, or a counter function of, a timer (318), upon receiving said communication to facilitate said host synchronisation timing mechanism (240).

10. A host communication unit (220) performing a hosting function for primary communication system transmissions, for example a host communication unit (220) according to Claim 8 or Claim 9, wherein the host communication unit (220) comprises:

   a receiver for receiving a communication (230) from a host transmitting unit (210); and
   a transmitter, for transmitting a communication to a receiving communication unit (120) of a primary communication system, wherein said communication comprises primary communication synchronisation data, said communication unit (220) **characterised by**:

   a signal processor (308) configured to determine a timing delay introduced by a hosting communication system on said communication (230), wherein said communication (230) comprises host synchronisation data (245) and said signal processor (308) modifies said primary communication synchronisation data based on said determined timing delay.

11. The host communication unit (220) according to Claim 10, wherein the communication unit (220) is further **characterised by**: said host synchronisation data (245) comprising a host start time in, or a counter function of, a timer (318), such that said signal processor (308) measures a time when said communication is received and calculates a host timing delay, by subtracting a start time embedded in the message from said measured time, or determines a host medium delay from based on a counter value to facilitate said host synchronisation timing mechanism (240).

12. A method of synchronisation in a communication system, the method comprising the steps of:

   receiving a communication (130) at a first host communication unit (210) from a transmitting communication unit (110) of a primary communication system (100), wherein the communication comprises synchronisation data, the method **characterised by** the steps of:

introducing a host synchronisation timing mechanism (240) into said communication to form a modified communication (230); routing (215) said modified communication (230) in a hosting communication system (200); receiving said modified communication (230) at a second host communication unit (220); determining a timing delay (255) of a host communication medium based on said host synchronisation timing mechanism (240); and modifying said communication for transmitting to a receiving communication unit (120) in said primary communication system (120) to indicate a timing adjustment so that said receiving communication unit (120) is able to synchronise to said transmitting communication unit (110).

13. A storage medium storing processor-implementable instructions or data for controlling a processor to carry out the method of Claim 12.

130

132 134 136

LEADING EDGE

132 134 136

110

120

100

-PRIOR ART-

SYNC. FRAME+
DELAY-CORRECTION'

138

# FIG. 1

302

306

FRONT-END
CIRCUITRY

307

BASEBAND
PROCESSING
CIRCUIT

304

318

TIMER

308

314

PROCESSOR

CONTROLLER

RSSI

316 — MEMORY

312

TRANSMITTER/
MODULATION
CIRCUITRY

324

322

210,220

# FIG. 3

FIG. 2

EP 1 429 482 A2